# EUROPEAN PATENT APPLICATION

(11) **EP 4 052 816 A1**
(43) Date of publication of application: **07.09.2022**
(21) Application number: 20883149.5
(22) Date of filing: 22.10.2020
(51) Int. Cl.: B22F 3/105, B33Y 40/00, B23K 26/342

(54) **LASER SHAPING DEVICE**

(30) Priority: 28.10.2019 KR 20190134871; 15.10.2020 KR 20200133207
(71) Applicant: Insstek, Inc., Daejeon 34109 (KR)
(72) Inventor: SEO, Suk Hyun, Daejeon 34107 (KR); AN, Seung Jun, Daejeon 34185 (KR)
(74) Representative: RGTH
(86) International application number: PCT/KR2020/014470
(87) International publication number: WO 2021/085932

(57) **Abstract**

The technology disclosed in the present specification relates to a laser shaping device for shaping powder by means of a laser, and the laser shaping device largely comprises: a powder discharge part for discharging powder at an object to be shaped; a laser emitting part for emitting energy at the discharged powder; and a powder supply part for supplying powder to the powder discharge part, wherein the powder supply part can comprise a storage part for storing the powder, a supply control part for enabling stored powder to flow therein and remain and enabling the powder to be discharged by means of external force, and a supply driving part for moving the supply control part repeatedly in the vertical direction.

## Description

### BACKGROUND OF THE DISCLOSURE

### Field of the disclosure

The present disclosure relates to a laser shaping device and, more particularly, to a laser shaping device which can stably supply a fixed amount of powder required for laser shaping.

### Related Art

The technology disclosed in the present specification is directed to a laser shaping device, and a representative example thereof may include laser-aided direct metal manufacturing technology. The laser-aided direct metal manufacturing technology may manufacture a 3D product or a tool needed to produce the product within a very short time using laser cladding technology which precisely and directly welds a functional material (metal, alloy, ceramic, etc.) with a laser according to digital data of 3D subjects stored in a computer. The data of 3D subjects refers to 3D CAD data, medical CT (Computer Tomography) and MRI (Magnetic Resonance Imaging) data, and digital data measured with a 3D object digitizing system, etc. The tool refers to a mass-production mold required for the production of products such as dies or molds. This technology is capable of manufacturing metal prototypes, mass-production molds, end products with complex shapes, and various tools within a very short time as compared to conventional machining methods such as cutting and casting using CNC (Computerized Numerical Control) and other processing machines, and is also applicable to the restoration, remodeling, and repairing of a mold using reverse engineering. The basic concept of realizing a physical shape from CAD data is similar to a general printer. Just as the printer creates a document by applying ink to an exact position on a 2D paper plane using a document data file stored in a computer, the direct metal manufacturing technology realizes a 3D physical shape by forming a required amount of functional material at an exact position of a 3D space using 3D CAD data. This technology is developed as a 3D printer, and is recently being commercialized in various ways according to the characteristics of material such as plastics, ceramics, paper, or metals. In the laser-aided direct metal manufacturing technology, a 2D plane is physically realized using laser cladding technology.

As the related art, Korean Patent Publication No. 10-2017-0097420 (published on Aug. 28, 2017 and entitled "Apparatus for manufacturing amorphous metal using 3D metal printer and amorphous metal") includes a laser emitting part which emits a laser beam to a specimen to generate a molten pool; a powder supply part which supplies metal powder to the generated molten pool; a control part which controls the movement of the laser emitting part in response to a thickness of a metal molten solution in which the metal powder is molten and 3D CAD data; and a cooling part which rapidly cools the metal molten solution into amorphous metal. The apparatus for manufacturing the amorphous metal using the 3D metal printer may further include a photographing part which photographs an image of the metal molten solution and an image analysis part which analyzes the photographed image to measure the thickness of the metal molten solution. The control part may calculate a tool path from the 3D CAD data, and may move the laser emitting part along the calculated tool path when a thickness of the metal molten solution reaches a preset thickness. The cooling part may rapidly cool the metal molten solution which is molten along the tool path to have the preset thickness into the amorphous metal using inert gas. The metal powder may include one or more selected from a group including Ni, Ce, La, Gd, Mg, Y, Sm, Zr, Fe, Ti, Co, Al, Cu, Mo, Sn, Nb and Si. The apparatus for manufacturing the amorphous metal using the 3D metal printer may further include a laser oscillator which oscillates the laser beam and a laser condenser which condenses the oscillated laser beam. The laser emitting part may emit the condensed laser beam to the specimen. The control part may control the movement of the laser emitting part to maintain the focal distance of the laser beam while the laser emitting part emits the laser beam. The control part may control the spray speed of the metal powder supplied from the powder supply part in response to the moving speed of the laser emitting part. The amorphous metal according to the present disclosure may be manufactured by the apparatus for manufacturing the amorphous metal using the 3D metal printer.

As the related art, Korean Patent Publication No. 10-1058382 (published on Aug. 22, 2011 and entitled "Nozzle for laser metal coating apparatus") includes a body having on a center a laser beam emitting hole through which a laser beam is emitted, a powder supply line which is connected to a side of the body to mix and supply a carrier gas and a metal powder, a purging gas supply line which is connected to a position where it does not interfere with the powder supply line and supplies a purging gas, a powder flow passage which is formed in the body and has a duct which is connected to the powder supply line to receive the carrier gas and the metal powder and discharge them to a side of the laser beam emitting hole, first and second cooling channels which are connected to the purging gas supply line to receive the purging gas and discharge it through the laser beam emitting hole, are configured to surround an outer surface of a side of the body, and circulate cooling water supplied from an outside, and a third nozzle part which is a conical member into which the first nozzle part is inserted and accommodated with a gap defined therebetween, receives air from the outside, circulates the air between the first nozzle part and the third nozzle part and thereby forms an air curtain hole around the discharged powder.

As the related art, Korean Patent Laid-Open Publication No. 10-2018-0040531 (published on Apr. 20, 2018 and entitled "3D printing laser beam irradiation apparatus and 3D printing laser beam irradiation system comprising the same") may include a laser beam alignment part which makes a path of a divergent laser beam into a parallel path and variably adjusts the width of the parallel path and a laser beam condensing part which condenses the laser beam incident through the laser beam alignment part and irradiates the laser beam onto a 3D stacked portion, and may change the size of the laser beam irradiated onto the 3D stacked portion through the laser beam condensing part by adjusting the width of the laser beam using the laser beam alignment part. The laser beam alignment part may include a first collimation lens which makes the path of the incident laser beam parallel. The laser beam alignment part may further include a convergent lens which causes the laser beam passing through the first collimation lens to converge thereon. The convergent lens may be mounted to be movable.

### SUMMARY

The present disclosure provides a laser shaping device which can stably supply a fixed amount of powder, thus increasing the accuracy of laser shaping.

In an aspect, a laser shaping device is disclosed.

The laser shaping device includes a powder discharge part 100 which discharges powder 10 to an object 1 to be shaped, a laser emitting part 200 which emits energy to the discharged powder 10, and the powder supply part 300 which supplies the powder 10 to the powder discharge part 100. The powder supply part 300 may include a storage part 310 in which the powder 10 is stored, a supply control part 320 provided so that stored powder is introduced and stays therein and configured to discharge the powder 10 by external force, and a supply driving part 330 moving the supply control part 320 and providing a force to increase and then reduce a moving speed in a process of reciprocating the supply control part 320.

The supply control part 320 may include a passage through which the powder 10 is introduced and discharged, and a direction of the passage may be changed at least twice or more.

The supply control part 320 may include an inlet passage 321 provided in a vertical direction, the powder 10 being introduced into the inlet passage; a control passage 322 connected to a lower portion of the inlet passage 321 and inclined upwards in a transverse direction; and a supply passage 323 connected to the control passage 322 and facing downwards.

The control passage 322 may be connected at a central portion thereof to the inlet passage 321, and be inclined upwards at both ends in the transverse direction, and the supply passage 323 may be connected to both ends of the control passage 322 to face downwards.

The supply driving part 330 may include a motor 331, a crank 332 performing a reciprocating movement by rotating force of the motor 331, and a motor control part 333 controlling the motor 331 according to the control period 20 in which a moving speed of the motor 331 is increased and then reduced in the process of reciprocating the supply control part 320.

The laser shaping device according to the present disclosure is advantageous in that the discharge amount of the powder 10 can be adjusted only by the control of the supply driving part 330 regardless of the amount of the powder 10 introduced into the supply control part 320 through the powder supply part 300.

The laser shaping device according to the present disclosure is advantageous in that a path through which the powder 10 is discharged from the supply control part 320 by the powder supply part 300 is very short, so that a reaction speed is fast.

### BRIEF DESCRIPTION OF THE DRAWINGS

FIG. 1 is a diagram schematically illustrating an entire laser shaping device disclosed in this specification.
FIG. 2 is a diagram illustrating the section of a supply control part disclosed in this specification.
FIG. 3 is a diagram illustrating a supply driving part disclosed in this specification.
FIG. 4 is a graph illustrating a relationship between time and the position of the supply control part and according to another example of a motor control part.

### DESCRIPTION OF EXEMPLARY EMBODIMENTS

Hereinafter, embodiments of the present disclosure will be described in detail with reference to the accompanying drawings. The same reference numerals are used throughout the drawings to designate the same or similar components. It is to be understood that the present description is not intended to limit the present disclosure to those exemplary embodiments, and the present disclosure is intended to cover not only the exemplary embodiments, but also various alternatives, modifications, equivalents and other embodiments that fall within the spirit and scope of the present disclosure. Those skilled in the art may easily understand that components of the present disclosure, i.e., components generally described herein and illustrated in the drawings may be arranged, configured, combined, and designed in various ways, all of them are clearly contemplated and form a part of the present disclosure. In order to clearly express several layers (or films), areas and shapes in the drawing, the width, length, thickness or shape of components may be exaggerated.

When a first component is disposed on a second component, the first component may be not only directly on the second component but a third part may be interposed between them.

When a first component is connected to a second component, the first component may be not only directly connected to the second component but a third part may be interposed between them.

When a first component is formed on a second component, the first component may be not only directly formed on the second component but a third part may be interposed between them.

When a first component is combined with a second component, the first component may be not only directly combined with the second component but a third part may be interposed between them.

Specific structural or functional descriptions in the embodiments of the present disclosure introduced in this specification or application are only for description of the embodiments of the present disclosure. The descriptions should not be construed as being limited to the embodiments described in the specification or application. The present disclosure may, however, be embodied in many different forms and should not be construed as being limited to only the embodiments set forth herein, but should be construed as covering modifications, equivalents or alternatives falling within ideas and technical scopes of the present disclosure.

In the present disclosure, the singular forms are intended to include the plural forms as well, unless the context clearly indicates otherwise. It will be further understood that the terms "comprise", "include", "have", etc. when used in this specification, specify the presence of stated features, integers, steps, operations, elements, components, and/or combinations of them but do not preclude the presence or addition of one or more other features, integers, steps, operations, elements, components, and/or combinations thereof.

Unless otherwise defined, all terms including technical and scientific terms used herein have the same meaning as commonly understood by one of ordinary skill in the art to which the present disclosure belongs. It will be further understood that terms used herein should be interpreted as having a meaning that is consistent with their meaning in the context of this specification and the relevant art and will not be interpreted in an idealized or overly formal sense unless expressly so defined herein.

Hereinafter, a laser shaping device disclosed in this specification will be schematically described with reference to the drawings. Referring to the drawings, the laser shaping device disclosed in this specification may mainly include a powder supply part 300, a laser emitting part 200, and a powder discharge part 100.

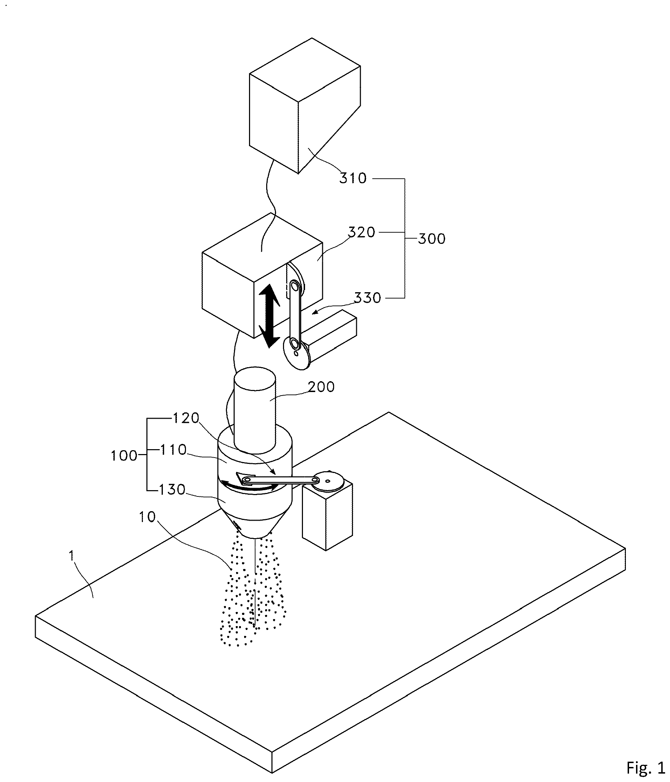

Referring to FIG. 1, the laser shaping device according to an embodiment includes the powder discharge part 100 which discharges powder 10 to an object 1 to be shaped, the laser emitting part 200 which emits energy to the discharged powder 10, and the powder supply part 300 which supplies the powder 10 to the powder discharge part 100.

The powder discharge part 100 is provided to discharge the powder 10 to the object 1 to be shaped. The powder discharge part 100 may be provided in the form of a general hose. The object 1 to be shaped may be provided as an article to which laser shaping is added or a support part which supports a laser shaping article.

For instance, the powder discharge part 100 may include a first division part 110 which is provided to surround the side surface of the laser emitting part 200 and through which the powder 10 is introduced and discharged in at least two directions. The powder discharge part 100 may include a division selector 120 which rotates the first division part 110 about the laser emitting part 200. In other words, the first division part 110 is configured to discharge the powder 10 to the lower portion of the first division part 110 where the laser emitting part 200 faces, if the powder 10 supplied from the powder supply part 300 is introduced.

The division selector 120 may be provided as a general motor (not shown) connected to the side surface of the first division part 110 via a general crank shaft. As the motor is driven, the division selector 120 may be provided to rotate the first division part 110 about the laser emitting part 200 and then return the first division part to an original position thereof. In other words, the division selector 120 may selectively change the positions of two spaces divided by the first division wall 114.

The powder discharge part 100 disclosed in this example divides and discharges a fixed amount of powder 10 supplied from the powder supply part 300 to a shaping position where the laser emitting part 200 faces. The divided and discharged powder 10 forms the powder 10 having an even upper surface at the shaping position where the laser emitting part 200 faces, as shown in FIG. 1, thereby increasing the accuracy of laser shaping.

The laser emitting part 200 is provided as a general laser which may shape metal. The laser emitting part 200 may be inserted and installed in the center of the powder discharge part 100. The laser emitting part 200 may melt the powder 10, which is discharged to the surface of the object 1 to be shaped, to form a specific shape.

The powder supply part 300 is provided to supply the powder 10 to the powder discharge part 100. The powder supply part 300 may mainly include a storage part 310 in which the powder 10 is stored, a supply control part 320, and a supply driving part 330.

In an example, referring to FIG. 1, the storage part 310 may be provided as a general container in which the powder 10 is stored. The storage part 310 is connected to the supply control part 320 to allow the powder 10 to be naturally introduced into the supply control part 320. A connection of the storage part 310 and the supply control part 320 may be provided as a general hose.

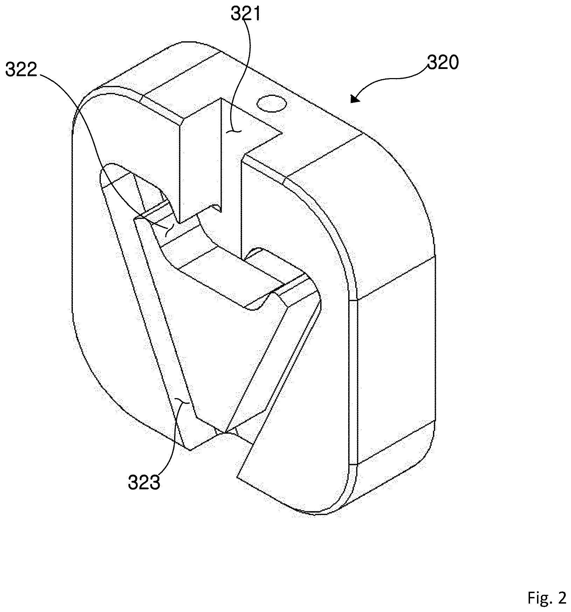

In an example, referring to FIG. 2, the supply control part 320 may be provided to allow the stored powder 10 to be introduced and stay therein. The supply control part 320 may be provided to discharge the powder 10 by external force. The supply control part 320 includes a passage through which the powder 10 is introduced and discharged, and the direction of the passage is changed at least twice or more. In detail, the supply control part 320 may mainly include an inlet passage 321, a control passage 322, and a supply passage 323.

The inlet passage 321 may be provided in the vertical direction. The inlet passage 321 is filled with the powder 10 which is naturally introduced from the storage part 310.

The control passage 322 may be provided as a passage which is connected to the lower portion of the inlet passage 321 and is inclined upwards in the transverse direction. In other words, the control passage 322 may be formed in the shape of an "L" together with the inlet passage 321, and may be provided such that an end thereof in the transverse direction is inclined upwards. The control passage 322 is inclined at an end thereof upwards to allow the powder 10 introduced into the inlet passage 321 to stay therein.

On the other hand, the control passage 322 may be connected at a central portion thereof to the inlet passage 321, and may be provided such that both ends thereof in the transverse direction are inclined upwards. In other words, the control passage 322 is provided to have a 'V'-shaped section. The control passage 322 forms a closed model in which the powder 10 may naturally stay, after it is fed from the storage part 310 to the supply control part 320.

Meanwhile, when there is no external force, the control passage 322 may be provided to have a sectional area in which the particles of the powder 10 may be aggregated and stay in the supply passage 323 due to Van der Waals force, friction between the particles, or friction between the particles and the supply passage 323.

The supply passage 323 may be provided as a passage which is connected to the control passage 322 and faces downwards. The supply passage 323 induces the natural falling motion of the powder 10 passing through the control passage 322. When there is no external force, the supply passage 323 may be provided to have a sectional area in which the particles of the powder 10 may be aggregated and stay in the supply passage 323 due to Van der Waals force, friction between the particles, or friction between the particles and the supply passage 323.

Meanwhile, the supply passage 323 may be provided to be connected to both ends of the 'V'-shaped control passage 322 and be merged at the bottom. In other words, the supply passage 323 is provided in the 'V' shape. An end of the supply passage 323 is connected to the powder discharge part 100.

Meanwhile, the control passage 322 and the supply passage 323 of the supply control part 320 through which the powder 10 is discharged may selectively adopt a size, the size or shape of a section or the direction of a path, depending on the particle shape and size of the powder 10 or material properties.

The supply control part 320 forms a closed model in a path where the powder 10 is supplied from the storage part 310 and then discharged, and prevents the powder 10 from flowing when there is no external force from the supply driving part 330. The close model changes the size of a path or passage where the particles of the powder 10 may move, the shape of a section or the direction of the path, thus preventing the powder 10 from flowing in the supply control part 320 due to various factors such as the friction between particles or the friction between the particles of the powder 10 and the passage, and the stress between the particles of the powder 10. The control passage 322 shown in the drawing is an example where the direction of a path along which the particles of the powder 10 may move is changed, and the supply passage 323 is an example where the direction of a path along which the particles may move and the size of the passage are changed. In other words, the supply control part 320 is configured to discharge the powder only when external force is applied.

The powder 10 introduced from the supply part 310 stays in the supply control part 320 disclosed in the example. In detail, the powder 10 stays in the inlet passage 321 and the control passage 322. The staying powder 10 may be introduced into the supply passage 323 only when external force acts thereon. To be more specific, the powder 10 which is the fine particle is filled in the inlet passage 321 and the control passage 322. In this state, the powder stays when there is no external force. However, when a distance between the particles is increased by external force, friction or stress between the particles is reduced, resulting in a fluidization phenomenon where the particles flow from a high place to a low place, like fluid. At this time, there occurs a residual flow in which a small amount of powder 10 flows due to the fluidization phenomenon even if the external force is eliminated.

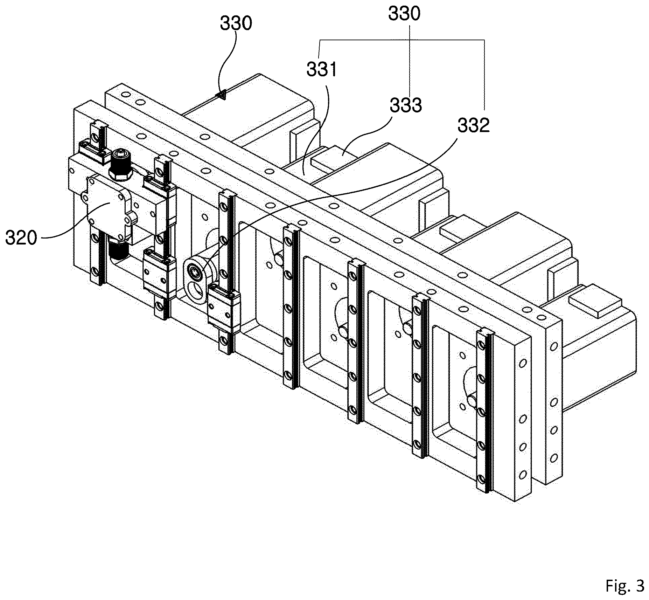

In an example, referring to FIG. 3, the supply driving part 330 may be provided to repeatedly move the supply control part 320 upwards and downwards. The supply control part 320 prevents the powder 10 from staying, thus allowing the powder 10 to be moved in the supply control part 320. In detail, the supply driving part 330 may mainly a general motor 331, a general crank 332, and a motor control part 333.

The motor 331 may be provided as a general servomotor that may control pulses.

The crank 332 may be provided to repeatedly move the supply control part 320 upwards and downwards by the rotating force of the motor 331.

In the case of implementing the motor 331 and the crank 332, the motor 331 performs a rotary motion and the supply control part 320 connected to the crank 332 performs a linear motion. In this case, even when the motor 331 operates at a constant speed, the supply control part 320 connected to the crank 332 continuously changes a movement direction and a movement speed.

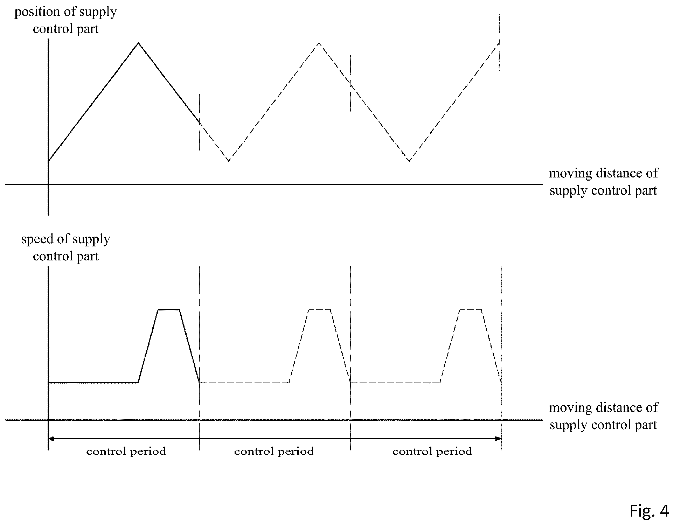

Referring to FIGS. 3 and 4, the motor control part 333 is provided to divide the rotating angle (360°) of a shaft of the motor 331 into a specific angle and to be rotated at a separate speed. The motor control part 333 may include a control period 20 where the operating speed of the motor 331 is increased once and then reduced once in a process where the supply control part 320 is reciprocated. The reciprocating movement means that the supply control part 320 is moved from the bottom to the top, then again to the bottom or from the top to the bottom, and then again to the top.

In other words, the motor control part 333 implements a section in which the speed is increased and a section in which the speed is reduced back to the original speed during a single movement in which the supply control part 320 moves from the bottom to the top and back to the bottom.

Meanwhile, the motor control part 333 may be used to control the rpm of the shaft by interlocking with a gear between the crank 332 and the shaft. The number of times of speed control described above may be variously changed.

The supply driving part 330 according to an example vertically moves the supply control part 320 in which the powder 10 stays, thus generating inertia. When the moving direction of the supply control part 320 is reversed from the top to the bottom or from the bottom to the top by the supply driving part 330, the staying powder 10 is abruptly moved and is stayed and agglomerated in the control passage 322 of the supply control part 320. Thereafter, the agglomerated powder 10 is dispersed and is moved to the supply passage 323 over the control passage 322. Moreover, the speed of the supply control part 320 which is moved from the bottom to the top and then from the top to the bottom is changed by the motor control part 333, thus providing irregular inertia. The irregular inertia may increase a phenomenon in which the agglomerated powder 10 is dispersed, so it is possible to suppress the adaptation of the powder 10 due to regular inertia. The adaptation of the powder 10 refers to a phenomenon (closed model) in which the powder 10 affected by regular external force is adapted to the regularity, so that the powder 10 is not dispersed or the fluidization phenomenon of the powder 10. The adaptation of the powder 10 according to the present disclosure is based on the fluidization phenomenon of the powder 10.

The motor 331 performs a rotary motion and the supply control part 320 connected to the crank 332 performs a linear motion. In this case, even when the motor 331 operates at a constant speed, the supply control part 320 connected to the crank 332 continuously changes a movement direction and a movement speed. In this situation, when the rotary motion of the motor 331 is divided into several sections having different average speeds, a continuous change in acceleration is imparted to the supply control part 320. Such a change in acceleration continuously makes the flow of the powder 10. In the section where it becomes slower than the average speed, the mobility of the powder is reduced. In the section where the average speed is high, the mobility of the powder is increased again, so that the powder is discharged. When the supply control part 320 is moved by a continuous acceleration and a change in acceleration, the amount of powder supplied per hour becomes stable.

Meanwhile, as shown in FIG. 4, the control period 20 of the motor control part 333 may be set to move the supply control part 320 by a distance which is obtained by excluding a predetermined distance from a total distance in the process of reciprocating the supply control part 320. In detail, the control period 20 is set to perform a movement by a distance which is 70% to 99% of the total distance by which the supply control part 320 reciprocates. For instance, assuming that an upward moving distance of the supply control part 320 is 5mm and a downward moving distance thereof is 5mm, and a total moving distance is 1cm, the motor control part 333 may move the supply control part 320 by 7mm to 9.9mm according to the control period 20. In other words, the supply control part 320 moves from the bottom to the top and then moves to the bottom by 2mm to 4.9mm. According to a new control period 20, the supply control part starts to move from a point of 2mm to 4.9mm again. Such a motor control part 333 may make the movement of the supply control part 320 more irregular, thus continuing to disperse the powder 10, and suppressing the fluidization phenomenon of the powder 10.

Meanwhile, after one control period 20 is finished, the moving direction of a new control period 20 may be reversed. The starting direction of the control period 20 may be irregularly set.

On the other hand, the control period 20 may be set such that the supply control part 320 further moves by a distance of 1% to 30% of the total reciprocating distance and runs at a constant speed for a predetermined time after the control period 20, and then the control period 20 may be started.

Meanwhile, when the supply control part 320 is rotated by the supply driving part 330, angular speed is not always constant. When the supply control part moves linearly, linear speed is not always constant. The speed is changed with time. This may be divided into several ranges according to average speed, and the control period 20 may be set according to the time width of these ranges. The external force is applied to the supply control part 320 by a difference between average speeds. Further, by adjusting the average speed for each section, a total amount of powder supplied per hour may be adjusted. In the case of driving without such a change in speed, the powder supply part may be repeatedly moved, and a closed model in which the powder stays in the powder supply part does not occur. In this case, the powder continuously flows without being affected by the supply part, and the exact supply amount of powder is not controlled. Therefore, a section where a difference in average speed occurs is formed so as to create time when the powder momentarily stays in the supply part.

Meanwhile, when a section is divided into several sections having different average speeds of the motor 331, a continuous change in acceleration is provided to the powder 10. Such a change in acceleration suppresses the fluidization phenomenon of the powder 10 in the supply control part 320, thus preventing the residual flow of the powder 10 and causing the powder 10 to be uniformly and continuously moved. If the average speed of the motor 331 is decreased, the mobility of the powder 10 is reduced. If the average speed is increased, the powder 10 may be smoothly moved. This makes the force of movement provided to the powder 10 irregular, thus suppressing a phenomenon in which the particles of the powder 10 are adapted to the same movement, so the powder particles stay or are agglomerated by Van der Waals force, and suppressing the fluidization phenomenon of the powder 10. As a result, when the supply driving part 330 is moved by continuous acceleration and a change in acceleration, the residual flow of the powder 10 is suppressed, thus making the supply amount of the powder 10 per hour stable.

Meanwhile, the supply driving part 330 may be implemented using a piezometer control part which controls an operation range in a process of reciprocating the piezometer and a movement period for increasing and reducing the speed.

The above-described powder supply part 300 may finely adjust the amount of the powder 10 supplied to the powder discharge part 100 through the amount of the powder 10 discharged through the control period 20. The powder supply part 300 may suppress a problem in which the powder 10 is erroneously discharged by the supply control part 320 due to external shocks or shakes in a transverse direction.

The above-described powder supply part 300 may adjust the discharge amount of the powder 10 only by the control of the supply driving part 330 regardless of the amount of the powder 10 introduced into the supply control part 320. In other words, even if the failure of the storage part 310 which stores the amount of the powder 10 occurs, a fixed amount of powder 10 may be discharged.

When describing the operational relationship of the supply control part 320 of the above-described powder supply part 300, the powder 10 stays and does not flow in the case that there is no force from the supply driving part 330. Thereafter, when the supply of the powder 10 is required, the supply driving part 330 is operated to break up the staying powder 10 and thereby create the flow of the powder 10.

The supply driving part 330 may move in x, y, and z axes in space, and may also rotate in yaw, roll, and pitch axes. All movements may break the stagnation of the powder 10 stored in the supply control part 320, thus causing the powder 10 to move. A vibration generator using a vibration motor and a piezo may also break the stagnation of the powder 10, thus causing the powder 10 to move.

In other words, the discharge amount of the powder 10 is adjusted according to the areas of the inlet passage 321, the control passage 322, and the supply passage 323 included in the supply control part 320, the movement speed of the supply driving part 330 and the displacement of the repeated movement.

The above-described powder supply part 300 is a device for discharging a predetermined amount of powder 10 positioned in the supply control part 320 by the supply driving part 330, and the precision and accuracy of the supply amount per hour vary depending on the shape and size of the inlet passage 321, the control passage 322, and the supply passage 323 included in the supply control part 320. Further, since the path through which the powder 10 is discharged from the supply control part 320 is very short, a reaction speed is fast. When the reaction speed refers to how quickly it may be adjusted to a desired supply amount per hour, the laser shaping device according to the present disclosure is fast in reaction speed because it is affected by the movement speed and acceleration of the supply driving part 330. This may discharge a desired amount of powder 10 when a change in supply amount per hour is required.

Meanwhile, the control period 20 may be one period movement or may be divided on the basis of time. At this time, the amount of the powder 10 supplied in one period is determined by the sectional shape of the passage of the supply control part 320, and affects the precision of the powder supply part 300. When the sectional size of the passage of the supply control part 320 decreases, an amount supplied in one period is reduced, so that the precision is increased but a maximum supply amount per hour is decreased due to a limit on movement which may be imparted by the supply driving part 330. On the contrary, when the sectional size of the passage of the supply control part 320 increases, the precision of the supply amount per hour is decreased but a maximum supply amount per hour is increased.

Since the powder supply part 300 is a device for discharging a certain percentage of the powder 10 filled in the supply control part 320 by the external supply passage 323, the precision and accuracy of a hourly supply amount vary depending on the internal shape of the supply control part 320. Further, since it takes a very short time for the powder 10 to be discharged from the supply control part 320, the reaction speed is increased compared to other types of supply devices.

When the reaction speed refers to how quickly it may be adjusted to a desired supply amount per hour according to a user's instruction, the present disclosure is fast in reaction speed because the amount of the powder 10 positioned in the powder supply part 300 is affected by the movement speed and acceleration of the supply driving part 330 in a state where it is not changed significantly for each period and each situation. This is useful when a change in supply amount per hour is required in the process of using the powder 10.

Even in the same movement of the supply driving part 330, the discharge amount of the powder 10 may be changed according to a difference in air pressure between the storage part 310 and the supply control part 320.

When there is no external force as essential conditions of the path through which the powder 10 moves, the supplied powder 10 should not flow into the supply passage 323. The movement path of the powder 10 should be determined in shape and size to satisfy these conditions. In general, the supplied powder 10 may not flow, but fluid having good flowability, such as air, becomes in a state in which it can easily flow. When a size is extremely small, air or like may become in a state where it may not flow by the Van der Waals force.

The control passage 322 of the supply control part 320 is generally shaped to prevent the powder 10 supplied to the inlet passage 321 from flowing to the supply passage 323. At this time, the inlet passage 321, the control passage 322, and the supply passage 323 may be provided as spaces which are not separated by other structures and devices.

Meanwhile, the powder supply part 300 according to the present disclosure may freely change the direction of the control passage 322 and the supply passage 323. At this time, the movement direction of the supply control part 320 may be freely changed through the supply driving part 330 according to the direction of the control passage 322 and the supply passage 323.

Although the present invention was described with reference to specific embodiments shown in the drawings, it is apparent to those skilled in the art that the present invention may be changed and modified in various ways without departing from the scope of the present invention, which is described in the following claims.

## Claims

1. A laser shaping device comprising:
a supply control part 320 provided so that stored powder 10 is introduced and stays therein, and configured to discharge the powder by external force; and
a supply driving part 330 moving the supply control part 320, and providing a force to increase and then reduce a moving speed in a process of reciprocating the supply control part.

2. The laser shaping device of claim 1, wherein the supply control part 320 comprises a passage through which the powder is introduced and discharged, and a direction of the passage is changed at least twice or more.

3. The laser shaping device of claim 2, wherein the supply control part 320 comprises:
an inlet passage 321 provided in a vertical direction, the powder being introduced into the inlet passage;
a control passage 322 connected to a lower portion of the inlet passage 321, and inclined upwards in a transverse direction; and
a supply passage 323 connected to the control passage 322, and facing downwards.

4. The laser shaping device of claim 3, wherein the control passage 322 is connected at a central portion thereof to the inlet passage 321, and is inclined upwards at both ends in the transverse direction, and
the supply passage 323 is connected to both ends of the control passage 322 to face downwards.
